# EUROPÄISCHE PATENTANMELDUNG

(11) **EP 0 690 641 A2**
(43) Veröffentlichungstag der Anmeldung: **03.01.1996**
(21) Anmeldenummer: 95109751.8
(22) Anmeldetag: 22.06.1995
(51) Int. Cl.: H04Q 7/30, H04Q 7/24

(54) **Mobilfunksystem**

(30) Priorität: 30.06.1994 DE 4423019
(71) Anmelder: SIEMENS AKTIENGESELLSCHAFT, D-80333 München (DE)
(72) Erfinder: Haubs, Georg Dr. rer.nat., D-82377 Penzberg (DE); Matt, Thomas, Dipl.-Ing., D-85258 Weichs (DE); Sanne, Martin, Dipl.-Ing., Midrand (ZA)

(57) **Zusammenfassung**

Bei einem Mobilfunksystem mit mindestens einer Vermittlungsstelle (SSS), an dieser angeschlossenen Basisstationen (BSS) und einer Mehrzahl von Mobilstationen (MS) weisen die Basisstationen (BSS) an Basis-Steuereinheiten (BSC) angeschlossene Basisfunkstationen auf, die mindestens teilweise als Mikro-Basisfunkstationen (MBS) ausgebildet sind. Diese Mikro-Basisfunkstationen (MBS) sind über übliche zweidrähtige Kupferleitungen (K) mit den Basis-Steuereinheiten (BSC) verbindbar. Es ist auch möglich, sie über die Kupferleitungen (K) mit der entsprechenden Versorgungsspannung zu speisen.

## Beschreibung

Die Erfindung bezieht sich auf ein Mobilfunksystem gemäß dem Oberbegriff des Anspruchs 1. Weiterhin bezieht sich die Erfindung auf eine Basisfunkstation des Mobilfunksystems.

Bei einem Mobilfunksystem ist üblicherweise eine zu versorgende Fläche in eine große Anzahl von Funkzellen eingeteilt. In diesen Funkzellen sind jeweils Basisfunkstationen vorgesehen, über die die Verbindungen zwischen einem öffentlichen Telefonnetz PSTN (Public Switched Telephone Network) und den Mobilstationen der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System für Mobile Communication). Ein ähnliches System ist das DCS 1800/PCS1900. Beim GSM ist in der Systemfläche, d.h. in der Fläche, in der das Mobilfunksystem eingeführt ist, die Funkzelle die kleinste Servicefläche für Rufe von und zu den Mobilstationen. Die Systemfläche kann eine Mehrzahl von Mobilfunknetzflächen (Public Land Mobile Network (PLMN) Areas) umfassen. Eine Mobilfunknetzfläche ist die geographische Servicefläche, in der ein Netzbetreiber seine Telekommunikationsdienste bereitstellt, beispielsweise ein Land. Die Mobilfunkteilnehmer können sich mit ihren Mobilstationen üblicherweise in der gesamten Systemfläche, d.h. in allen Mobilfunknetzflächen, bewegen und dort jeweils angebotene Telekommunikationsdienste in Anspruch nehmen.

Als Bindeglieder zwischen dem öffentlichen drahtgebundenen Fernsprechnetz PSTN oder einem weiteren Mobilfunknetz PLMN und den Basisfunkstationen sind Vermittlungsstellen vorgesehen, wobei zwischen den Vermittlungsstellen und den Basisfunkstationen noch Basisstations-Steuerungen vorgesehen sind, die jeweils eine oder mehrere Basisfunkstationen steuern.

Bisher wurde die Funkversorgung von Mobilfunknetzen durch den Einsatz von verhältnismäßig teuren Basisfunkstationen mit hohen Antennenausgangsleistungen und großen physikalischen Dimensionen erbracht. Diese Basisfunkstationen bestehen aus einer großen Anzahl von Bauteilen, die durch ihre Vielzahl die Ausfallsicherheit negativ beeinflussen können. Der Aufstellungsort der Basisfunkstationen muß genauestens geplant werden, um eine lückenlose Funkversorgung zu gewährleisten. Die Funkversorgung innerhalb von Gebäuden wird durch diese Basisfunkstationen jedoch nicht sichergestellt, weil für die Aufstellung der Basisfunkstationen in der Regel nur Standorte außerhalb der Gebäude in Frage kommen. Eine Funkversorgung innerhalb von Gebäuden wird nur durch sehr hohe Antennenausgangsleistungen möglich. Wenn jedoch die sich innerhalb des Gebäudes befindende Mobilstation nicht mit entsprechenden Leistungen senden kann, führt dies zu einem Abbruch der Funkverbindung. Weiterhin kann sich ein Betreiber den Standort für die Aufstellung von Basisfunkstationen nicht immer aussuchen und wird daher gezwungen, teilweise auf weniger geeignete Standorte auszuweichen. Hinzu kommen schließlich noch Umweltaspekte wie die elektromagnetische Verträglichkeit und die Ergonomie, die jeweils die Ahtennenausgangsleistung und die Größe bzw. das Volumen der Basisfunkstationen einschränken.

Der Erfindung liegt daher die Aufgabe zugrunde, ein Mobilfunksystem anzugeben und eine Basisfunkstation für das Mobilfunksystem bereitzustellen, die kostengünstig herstellbar ist und die beliebig innerhalb und außerhalb von Gebäuden aufgestellt werden kann.

Erfindungsgemäß wird die Aufgabe bei dem Mobilfunksystem der eingangs genannten Art durch die im Patentanspruch 1 angegebenen Merkmale gelöst. Eine entsprechende Basisstation für das Mobilfunksystem, das eine Vielzahl von derartigen Basistationen aufweisen kann, ist in Patentanspruch 19 angegeben.

Gemäß der Erfindung wird in dem Mobilfunksystem eine Vielzahl von Mikro-Basisfunkstationen verwendet. Diese Mikro-Basisfunkstationen haben ein sehr kleines Volumen und können durch den Einsatz einer Technologie, wie sie bei den Mobilstationen verwendet wird, sehr kostengünstig hergestellt werden. Beispielsweise hat eine Mobilstation gegenwärtig ein Volumen unter 500 cm³. Eine Mikrobasisfunkstation würde dann ein vergleichbares Volumen von ca. acht Mobilstationen haben, d.h. typischerweise ist ein Volumen von unter fünf Litern möglich. Durch die Anwendung der Vielzahl von Mikro-Basisfunkstationen kann die Antennenausgangsleistung auf weniger als zwei Watt festgelegt werden. Diese Leistung entspricht auch der in der GSM-Spezifikation für Kleinstzellennetze mit Zellradien von 50 bis 500 Metern angegebenen Antennenausgangsleistung.

Die Anbindung der Mikro-Basisfunkstationen an das Festnetz kann über normale zweiadrige Kupferdrähte, wie sie im öffentlichen Fernsprechnetz PSTN benutzt werden, erfolgen. Die Verbindung kann dann als eine Wählverbindung ausgebildet sein, die nur im Bedarfsfall die Verbindung über das Fernsprechnetz zur Basisstationssteuerung herstellt. Sie kann aber auch als eine Standverbindung ausgebildet sein. Die Kupferdrähte können transparent genutzt werden oder aber auch in Form der bekannten ISDN S0-Normschnittstelle mit 144 kbit/s. Weiterhin können für die Anbindung auch PCM30-Verbindungen nach CCITT-Norm mit einer Übertragungsgeschwindigkeit von 2 Mbit/s verwendet werden. Die Mikro-Basisfunkstationen gemäß der Erfindung können beliebig innerhalb oder außerhalb von Gebäuden unauffällig aufgestellt werden. Sie können beispielsweise auf Dächer aufgestellt oder an Wänden oder Laternenmasten befestigt werden. Die zugehörigen Antennen sind entsprechend unauffällig ausgebildet.

Die Spannungsversorgung kann über Fernspeisung über die zweiadrigen Kupferdrähte erfolgen oder gegebenenfalls auch über das übliche Stromnetz mit beispielsweise 220 Volt.

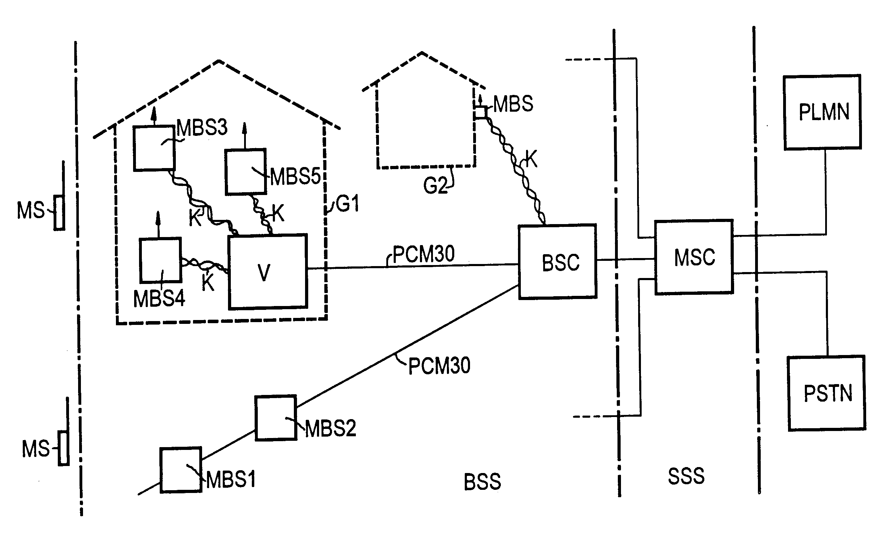

Ein Ausführungsbeispiel der Erfindung wird im folgenden anhand der Figur beschrieben.

Die Figur zeigt ein Blockschaltbild eines mit Mikro-Basisfunkstationen versehenen Mobilfunksystems.

Der in der Figur dargestellte Teil eines, beispielsweise entsprechend dem GSM ausgebildeten, Mobilfunksystems ist auf der Basis eines elektronischen Vermittlungssystems ausgebildet. Er enthält ein Vermittlungssystem SSS und ein Basisstationen BSS und Mobilstationen MS enthaltendes Funksystem. Das Vermittlungssystem SSS stellt die Verbindung zwischen der Basisstation BSS und einem öffentlichen Telefonnetz PSTN, beispielsweise einem ISDN-Netz oder mit einer anderen Vermittlungsstelle desselben oder eines anderen Mobilfunknetzes PLMN, her. Die Basisstationen BSS stellen alle Funktionen zur Verfügung, die erforderlich sind, um eine Funkdeckung zu gewährleisten, und die Mobilstationen MS stellen alle Funktionen für den Teilnehmer bereit. Jede Basisstation BSS umfaßt eine Basisstations-Steuerung BSC, die alle Funktionen für die Funkübertragung durchführt, lokale Vorgänge bearbeitet und Wartungsfunktionen ausführt, und mehrere Mikro-Basisfunkstationen MBS. Eine Basisstations-Steuerung BSC verwaltet eine Vielzahl von Mikro-Basisfunkstationen MBS. Die Mikro-Basisfunkstationen MBS führen alle funktechnischen Funktionen aus, und sie unterstützen die Funkschnittstelle zu den Mobilstationen MS.

Das Vermittlungssystem SSS enthält neben einer Mobilfunkvermittlungsstelle MSC (Mobile Services Switching Center) weitere nicht dargestellte Einheiten, nämlich eine mit der Vermittlungsstelle verbundene Heimatdatei, in der Daten von dort registrierten Mobilstationen MS gespeichert sind, eine Besucherdatei und ein Geräteidentifizierungsregister. An einer Mobilfunkvermittlungsstelle MSC können mehrere Basisstations-Steuerungen BSC angeschlossen sein. Diese führen auch die Zuweisung von Funkkanälen bzw. Funkzeitschlitzen zwischen den Mikro-Basisfunkstationen und den Festnetzkanälen durch.

Die in der Figur dargestellten Mikro-Basisfunkstationen MBS weisen vorzugsweise eine Kapazität auf, die auf einen Funkkanal beschränkt ist, wobei dieser Funkkanal mehrere Zeitschlitze aufweisen kann und damit mehrere Gespräche gleichzeitig führen kann. Beispielsweise würde für das GSM ein Funkkanal bei einer sog. Full-Rate-Sprachcodierung von 13 kbit/s acht Sprachkanäle führen bzw. bei einer sog. Half-Rate-Sprachcodierung von 6,5 kbit/s 16 Sprachkanäle.

Die Mikro-Basisfunkstationen MBS weisen ein sehr kleines Volumen auf, das insbesondere dadurch erreicht wird, daß dieselbe Technologie wie bei den Mobilstationen MS verwendet wird. Die Mikro-Basisfunkstationen MBS versorgen nur kleine Zellen, sog. Mikrozellen, und damit kann die Antennenausgangsleistung der Mikro-Basisfunkstationen MBS derart eingestellt werden, daß sie beispielsweise kleiner als zwei Watt ist. Diese Antennenausgangsleistung entspricht auch der für Kleinstzellennetze vorgesehenen Ausgangsleistung, die in der GSM-Spezifikation vorgesehen ist.

Die Mikro-Basisfunkstationen MBS weisen vorzugsweise nur wenige betriebstechnische Leistungsmerkmale auf. Beispielsweise genügt eine einzige betriebstechnische Meldung an die Basisstations-Steuerung BSC, um einen Fehler zu signalisieren. Wenn ein nicht automatisch behebbarer Fehler auftritt, wird die vollständige Mikro-Basisfunkstation MBS von einem Wartungstechniker ausgetauscht und in der Werkstatt repariert. Damit ist es nicht erforderlich, daß die Mikro-Basisfunkstation MBS redundante Einheiten aufweist. Im GSM- oder DCS-Netz werden die Mikro-Basisfunkstationen MBS mit 16 kbit/s LAPD-Signalisierung betrieben. Dies ermöglicht die Nutzung von freier Leitungskapazität, die dadurch entsteht, daß auf der Luftschnittstelle nur sieben Sprachkanäle mit jeweils 13 kbit/s übertragen werden. Der achte Zeitschlitz auf der Luftschnittstelle wird für den Organisationskanal benötigt. Dieser ist beispielsweise der vom GSM bekannte BCCH (Broadcast Control Channel).

Wie der Figur zu entnehmen ist, können die Mikro-Basisfunkstationen MBS sowohl in einem Gebäude G1 als auch an der Außenseite eines Gebäudes G2 befestigt sein. Die Anbindung der Mikro-Basisfunkstationen MBS erfolgt beispielsweise über normale zweiadrige Kupferdrähte, wie sie im üblichen Festtelefonnetz benutzt werden. Die Mikro-Basisfunkstationen sind daher über das normale Telefonnetz leicht erreichbar, und es sind keine eigenen Leitungen erforderlich. Im Gegenteil, es können bisher ungenutze, jedoch vorhandene Kupferleitungen aktiviert werden und dem Betreiber des Festtelefonnetzes weitere Einkünfte bringen. Damit ist die Art der Anbindung für die Betreiber des Festtelefonnetzes ebenfalls von hohem Interesse. Die Verbindung zwischen der Basis-Steuereinheit BSC und den Mikro-Basisfunkstationen kann über Wähl- oder Standverbindungen des öffentlichen Fernsprechnetzes erfolgen. Gegebenenfalls kann auch eine Fernspeisung der Spannungsversorgung der Mikro-Basisfunkstationen MBS über diese zweiadrigen Kupferdrähte erfolgen, wodurch der Anschluß der Mikro-Basisfunkstationen MBS noch weiter erleichtert wird. Die zweiadrigen Kupferdrähte können transparent genutzt werden oder auch in Form einer ISDN S0-Normschnittstelle mit 144 kbit/s. Weiterhin kann für den Anschluß der Mikro-Basisfunkstationen MBS auch eine standardmäßige PCM30-Strecke mit einer Übertragungsrate von 2 Mbit/s nach CCITT-Norm benutzt werden, wie es bei den Mikro-Basisfunkstationen MBS1 und MBS2 in der Figur dargestellt ist.

Die Mikro-Basisfunkstationen MBS können integrierte Spezialantennen beinhalten, so daß nur ein geringer Raumbedarf für das Antennensystem erforderlich ist und die Mikrobasisfunkstation MBS möglichst unauffällig wirkt.

Die Spannungsversorgung kann, wie bereits erwähnt, über die zweiadrigen Kupferdrähte erfolgen. Gegebenenfalls kann die Spannungsversorgung jedoch auch über ein übliches Spannungsversorgungsnetz mit beispielsweise 220 Volt erfolgen.

Die Mikro-Basisfunkstationen MBS können auch, wie es bei den Mikro-Basisfunkstationen MBS3 bis MBS5 gezeigt ist, über einen Vorkonzentrator V angeschlossen werden. Der Vorkonzentrator V ist mit der Basisstations-Steuerung BSC über eine oder mehrere PCM30-Strecken verbunden. Er führt eine Umsetzung zwischen den auf den zweiadrigen Kupferdrähten mit 144 kbit/s übertragenen Signalen und den auf der PCM30-Strecke mit 2 Mbit/s übertragenen Signalen durch. Zwischen dem Vorkonzentrator V und der Basisstations-Steuerung BSC kann auch eine Richtfunkstrecke oder eine Lichtleiterstrecke vorgesehen sein. Weiterhin kann der Vorkonzentrator V auch die Spannungsversorgung für die Fernspeisung der Mikro-Basisfunkstationen MBS3 bis MBS5 übernehmen.

## Patentansprüche

1. Mobilfunksystem mit mindestens einer Vermittlungsstelle (SSS), an dieser angeschlossene Basisstationen (BSS) und einer Mehrzahl von Mobilstationen (MS), wobei die Basisstationen (BSS) mindestens eine Basis-Steuereinheit (BSC) aufweisen,
**dadurch gekennzeichnet,**
daß mindestens ein Teil der Basisstationen (BSS) als Mikro-Basisfunkstationen (MBS) ausgebildete Basisfunkstationen enthält, die mit der Basis-Steuereinheit (BSC) verbunden sind.

2. Mobilfunksystem nach Anspruch 1,
**dadurch gekennzeichnet,**
daß die Mikro-Basisfunkstationen (MBS) über zweidrähtige Kupferleitungen (K) an der Basis-Steuereinheit (BSC) angeschlossen sind.

3. Mobilfunksystem nach Anspruch 2,
**dadurch gekennzeichnet,**
daß die Mikro-Basisfunkstationen (MBS) über zweidrähtige Kupferleitungen (K) des öffentlichen Fernsprechnetzes an der Basis-Steuereinheit (BSC) angeschlossen sind.

4. Mobilfunksystem nach Anspruch 3,
**dadurch gekennzeichnet,**
daß die Mikro-Basisfunkstationen (MBS) über zweidrähtige Kupferleitungen (K) des öffentlichen Fernsprechnetzes in Form einer Wählverbindung an der Basis-Steuereinheit (BSC) angeschlossen sind.

5. Mobilfunksystem nach Anspruch 3,
**dadurch gekennzeichnet,**
daß die Mikro-Basisfunkstationen (MBS) über zweidrähtige Kupferleitungen (K) des öffentlichen Fernsprechnetzes in Form einer Standverbindung an der Basis-Steuereinheit (BSC) angeschlossen sind.

6. Mobilfunksystem nach einem der Ansprüche 2 bis 5,
**dadurch gekennzeichnet,**
daß die Mikro-Basisfunkstationen (MBS) über zweidrähtige Kupferleitungen (K) entsprechend dem Standard ISDN SO mit einer Übertragungsrate von 144 kbit/s an der Basis-Steuereinheit (BSC) angeschlossen sind.

7. Mobilfunksystem nach Anspruch 1,
**dadurch gekennzeichnet,**
daß die Mikro-Basisfunkstationen (MBS) über Zeitmultiplexverbindungsleitungen (PCM 30) an der Basis-Steuereinheit (BSC) angeschlossen sind.

8. Mobilfunksystem nach Anspruch 7,
**dadurch gekennzeichnet,**
daß die Mikro-Basisfunkstationen (MBS) über an sich bekannte Zeitmultiplexverbindungsleitungen (PCM 30), die eine Übertragungsrate von 2 Mbit/s aufweisen, an der Basis-Steuereinheit (BSC) angeschlossen sind.

9. Mobilfunksystem nach einem der vorangehenden Ansprüche,
**dadurch gekennzeichnet,** daß die Stromversorgung der Mikro-Basisfunkstationen (MBS) über die Verbindungsleitungen mit der Basis-Steuereinheit (BSC) erfolgt.

10. Mobilfunksystem nach einem der vorangehenden Ansprüche,
**dadurch gekennzeichnet,**
daß die Mikro-Basisfunkstationen (MBS) jeweils nur einen Funkkanal aufweisen, über den einen Mehrzahl von Übertragungen erfolgt.

11. Mobilfunksystem nach Anspruch 10,
**dadurch gekennzeichnet,**
daß der Funkkanal eine Mehrzahl von Gesprächskanälen und mindestens einen Steuerkanal aufweist.

12. Mobilfunksystem nach einem der vorangehenden Ansprüche,
**dadurch gekennzeichnet,**
daß die Mikro-Basisfunkstationen (MBS) innerhalb von Gebäuden (G1) angebracht sind.

13. Mobilfunksystem nach einem der vorangehenden Ansprüche,
**dadurch gekennzeichnet,**
daß die Mikro-Basisfunkstationen (MBS) an der Außenseite von Gebäuden (G2) angebracht sind.

14. Mobilfunksystem nach einem der vorangehenden Ansprüche,
**dadurch gekennzeichnet,**
daß die Mikro-Basisfunkstationen (MBS) über einen Vorkonzentrator (V) an der Basis-Steuereinheit (BSC) angeschlossen sind.

15. Mobilfunksystem nach Anspruch 14,
**dadurch gekennzeichnet,**
daß der Vorkonzentrator (V) über Zeitmultiplexverbindungsleitungen (PCM 30) an der Basis-Steuereinheit (BSC) angeschlossen ist.

16. Mobilfunksystem nach Anspruch 14 oder Anspruch 15,
**dadurch gekennzeichnet,**
daß die Stromversorgung der Mikro-Basisfunkstationen (MBS) über den Vorkonzentrator (V) erfolgt.

17. Mobilfunksystem nach einem der Ansprüche 14 bis 16,
**dadurch gekennzeichnet,**
daß der Vorkonzentrator (V) innerhalb eines Gebäudes (G1) angeordnet ist.

18. Mobilfunksystem nach einem der vorangehenden Ansprüche,
**dadurch gekennzeichnet,**
daß die Mikro-Basisfunkstationen (MBS) mit der an sich bekannten 16 kbit/s LAPD-Signalisierung betrieben werden.

19. Basisfunkstation für ein Mobilfunksystem mit mindestens einer Vermittlungsstelle (SSS), an dieser angeschlossenen Basisstationen (BSS) und einer Mehrzahl von Mobilstationen (MS), wobei die Basisstationen (BSS) mindestens eine Basis-Steuereinheit (BSC) aufweisen, an der die Basisfunkstation anschließbar ist,
**dadurch gekennzeichnet,**
daß die Basisstation (BSS) als Mikro-Basisfunkstation (MBS) ausgebildet ist.

20. Basisfunkstation nach Anspruch 19,
**dadurch gekennzeichnet,**
daß die Mikro-Basisfunkstation (MBS) über zweidrähtige Kupferleitungen (K) an der Basis-Steuereinheit (BSC) angeschlossen ist.

21. Basisfunkstation nach Anspruch 20,
**dadurch gekennzeichnet,**
daß die Mikro-Basisfunkstation (MBS) über zweidrähtige Kupferleitungen (K) des öffentlichen Fernsprechnetzes an der Basis-Steuereinheit (BSC) angeschlossen ist.

22. Basisfunkstation nach einem der Ansprüche 19 bis 21,
**dadurch gekennzeichnet,**
daß die Mikro-Basisfunkstation (MBS) über zweidrähtige Kupferleitungen (K) entsprechend dem Standard ISDN SO mit einer Übertragungsrate von 144 kbit/s an der Basis-Steuereinheit (BSC) angeschlossen ist.

23. Basisfunkstation nach Anspruch 19,
**dadurch gekennzeichnet,**
daß die Mikro-Basisfunkstation (MBS) über eine Zeitmultiplexverbindungsleitung (PCM 30) an der Basis-Steuereinheit (BSC) angeschlossen ist.

24. Basisfunkstation nach einem der Ansprüche 19 bis 23,
**dadurch gekennzeichnet,**
daß die Mikro-Basisfunkstationen (MBS) eine Spannungsversorgung aufweist, die über die Verbindungsleitungen zur Basis-Steuereinheit (BSC) gespeist wird.

25. Basisfunkstation nach einem der Ansprüche 19 bis 24,
**dadurch gekennzeichnet,**
daß die Mikro-Basisfunkstation (MBS) nur einen Funkkanal aufweist, über den einen Mehrzahl von Übertragungen erfolgt.

26. Basisfunkstation nach einem der Ansprüche 19 bis 25,
**dadurch gekennzeichnet,**
daß die Mikro-Basisfunkstation (MBS) entsprechend der bei Mobilstationen (MS) vorhandenen Technologie aufgebaut sind und bei Mobilstationen (MS) verwendete Bauteile enthält.

27. Basisfunkstation nach einem der Ansprüche 19 bis 26,
**dadurch gekennzeichnet,**
daß die Mikro-Basisfunkstation (MBS) über einen Vorkonzentrator (V) an den Basis-Steuereinheiten (BSC) anschließbar ist.

28. Basisfunkstation nach einem der Ansprüche 19 bis 27,
**dadurch gekennzeichnet,**
daß die Mikro-Basisfunkstation (MBS) entsprechend der an sich bekannten 16 kbit/s LAPD-Signalisierung betreibbar ist.

29. Basisfunkstation nach einem der Ansprüche 19 bis 28,
**dadurch gekennzeichnet,**
daß die Mikro-Basisfunkstation (MBS) eine Ausgangsleistung aufweist, die zwei Watt nicht überschreitet.
